(19) Europäisches Patentamt
European Patent Office
Office européen des brevets

(11) **EP 1 751 774 B1**

(12) **FASCICULE DE BREVET EUROPEEN**

(45) Date de publication et mention de la délivrance du brevet:
**03.10.2012 Bulletin 2012/40**

(21) Numéro de dépôt: **04767221.7**

(22) Date de dépôt: **01.06.2004**

(51) Int Cl.:
*G21C 7/00* (2006.01)     *G21C 3/07* (2006.01)
*C22C 16/00* (2006.01)     *C22F 1/18* (2006.01)

(86) Numéro de dépôt international:
**PCT/FR2004/001349**

(87) Numéro de publication internationale:
**WO 2006/003266 (12.01.2006 Gazette 2006/02)**

(54) **PROCEDE D'EXPLOITATION D'UN REACTEUR NUCLEAIRE ET UTILISATION D'UN ALLIAGE SPECIFIQUE DE GAINE DE CRAYON DE COMBUSTIBLE POUR REDUIRE L'ENDOMMAGEMENT PAR INTERACTION PASTILLES/GAINE**

VERFAHREN ZUM BETRIEB EINES KERNREAKTORS UND VERWENDUNG EINER SPEZIFISCHEN HÜLLROHR-LEGIERUNG ZUR VERRINGERUNG VON PELLET-/ HÜLLROHRBESCHÄDIGUNGEN

METHOD FOR OPERATING A NUCLEAR REACTOR AND USE OF A SPECIFIC CLADDING TUBE ALLOY FOR REDUCING PELLET/CLADDING DAMAGE

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**14.02.2007 Bulletin 2007/07**

(73) Titulaire: **Areva NP**
**92400 Courbevoie (FR)**

(72) Inventeurs:
• **DELAFOY, Christine**
**F-69004 Lyon (FR)**
• **JULIEN, Bruno**
**F-69006 Lyon (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**EP-A- 1 308 966     WO-A-01/24193**
**FR-A- 2 776 821     US-A- 5 244 514**
**US-A- 5 838 753     US-A- 5 844 959**
**US-B1- 6 261 516**

**Description**

La présente invention concerne un procédé d'exploitation d'un réacteur nucléaire pour produire de l'électricité, le réacteur comprenant un coeur chargé avec des assemblages comportant des crayons de combustible nucléaire, au moins un crayon étant du type comprenant :

- une gaine en alliage à base de zirconium et
- des pastilles de combustible nucléaire à base d'oxyde d'uranium, les pastilles étant empilées à l'intérieur de la gaine.

L'invention s'applique par exemple, mais pas exclusivement aux réacteurs à eau pressurisée (REP).

WO-02/45 096 décrit un crayon de combustible du type précité. Ce document décrit en particulier l'utilisation d'oxyde de chrome $Cr_2O_3$ comme additif dans les pastilles de combustible pour favoriser leur fluage thermique et limiter les risques d'endommagement de la gaine par le phénomène d'interaction pastille/gaine.

La gaine du crayon est la première barrière de confinement des produits de fission, les autres barrières étant constituées par la cuve du réacteur et son enceinte en béton.

En fonctionnement normal (situations dites de classe 1) et incidentel (situations dites de classe 2), l'étanchéité de la gaine vis-à-vis des produits de fission doit donc être garantie.

Lors d'un transitoire de puissance correspondant à une situation de classe 2, la puissance atteinte localement dans le combustible peut être deux à trois fois supérieure à la puissance nominale. Cette augmentation rapide de puissance entraîne une dilatation importante des pastilles. La dilatation thermique des pastilles l'emportant sur celle de la gaine, il en résulte une mise en traction de la gaine par les pastilles et une augmentation des contraintes en surface interne de la gaine. Ces contraintes se relaxent progressivement par fluage. Par ailleurs, cette sollicitation mécanique a lieu en présence d'un environnement chimique agressif dû aux produits de fission, tels que l'iode, dégagés par le combustible pendant le transitoire de puissance.

On parle alors d'Interaction Pastille Gaine (IPG), phénomène qui peut conduire à la rupture de la gaine.

Or, une telle rupture de la gaine n'est pas admise pour des raisons de sûreté, puisqu'elle pourrait conduire à la libération de produits de fission dans le circuit primaire du réacteur.

Comme en atteste la très grande majorité des examens de crayons de combustible rompus par IPG en réacteurs d'essais, le risque de rupture est indéniablement localisé : radialement (en surface interne de gaine), axialement (aux plans inter-pastilles) et azimutalement (face aux fissures radiales primaires des pastilles de combustible).

En effet, à forte puissance, la différence de déplacement diamétral entre le combustible et la gaine, ainsi que le sur-déplacement diamétral de la pastille, sont exacerbés aux extrémités de la pastille (mise en diabolo de la pastille engendrée par le gradient thermique radial dans le combustible). Il en résulte un niveau de contrainte élevé en surface interne de la gaine, niveau qui peut dépasser la limite élastique du matériau constituant la gaine, généralement du Zircaloy-4, provoquant ainsi l'endommagement de la gaine.

Ce chargement mécanique est encore plus important au niveau des plans inter-pastilles et aux points de contact entre la gaine et le bord des fissures radiales primaires engendrées par la fragmentation des pastilles de combustible lors de l'irradiation en fonctionnement normal. Par ailleurs, le niveau de température élevé dans les pastilles favorise le relâchement de produits de fission, comme l'iode, qui viennent se condenser en surface interne de la gaine, préférentiellement au niveau des plans inter-pastilles (zones moins chaudes) et en face des fissures radiales primaires du combustible (chemin privilégié pour l'évacuation des gaz de fission).

Lors d'une rupture de la gaine par IPG, la gaine se fissure et les gaz de fission peuvent contaminer le circuit primaire.

L'utilisation de $Cr_2O_3$ comme additif dopant dans des pastilles de combustible, chargées dans des gaines de Zircaloy-4, s'est avérée utile vis-à-vis de l'IPG.

Toutefois, les risques de rupture par IPG ne sont encore assez réduits si bien que la flexibilité d'exploitation des réacteurs utilisant de tels crayons resterait trop faible.

FR 2 76 821, US 5 838 753, US 5 844 959 et WO 01/24193 décrivent des alliages de gaines de crayons de combustible nucléaire.

Un but de l'invention est donc de résoudre ce problème en permettant une exploitation plus souple d'un réacteur nucléaire.

A cet effet, l'invention a pour objet un procédé d'exploitation d'un réacteur nucléaire selon la revendication 1.

Selon des modes particuliers de réalisation, le procédé peut comprendre l'une ou plusieurs des caractéristiques des revendications 2 à 18.

L'invention a également pour objet une utilisation selon la revendication 19.

L'invention sera mieux comprise à la lecture de la description qui va suivre, donnée uniquement à titre d'exemple et faite en se référant aux dessins annexés, sur lesquels :

- la figure 1 est une vue schématique latérale d'un assemblage de combustible nucléaire permettant la mise en oeuvre d'un procédé d'exploitation selon l'invention,
- la figure 2 est une vue schématique en coupe longitudinale d'un crayon de l'assemblage de la figure 1,
- la figure 3 est une vue schématique, partielle et agrandie, illustrant la forme d'une pastille du crayon de la figure 2,

- la figure 4 est un graphique illustrant le domaine de stabilité de l'oxyde $Cr_2O_3$,
- la figure 5 est une vue schématique d'un réacteur nucléaire mettant en oeuvre un procédé d'exploitation selon l'invention, et
- la figure 6 est un diagramme représentant des domaines de fonctionnement du réacteur de la figure 5.
- la variation de puissance linéique du crayon de combustible nucléaire reste inférieure à une variation limite, la variation limite étant supérieure à 180W/cm.

Selon des modes particuliers de réalisation, le procédé peut comprendre l'une ou plusieurs des caractéristiques suivantes, prise(s) isolément ou selon toutes les combinaisons techniquement possibles :

- la puissance linéique limite est supérieure à 440W/cm,
- la variation limite est supérieure à 200W/cm,
- la variation limite est supérieure à 220W/cm,
- l'alliage comprend en masse entre 5 et 35ppm de soufre,
- l'alliage comprend entre 0,03 et 0,25% au total de fer et de chrome et/ou de vanadium,
- l'alliage a subi des recuits à des températures inférieures à 600°C,
- les pastilles comprennent au moins un oxyde métallique d'augmentation du fluage thermique des pastilles et en ce que la puissance linéique limite est supérieure à 590W/cm,
- la puissance linéique limite est supérieure à 600W/cm,
- la puissance linéique limite est supérieure à 610W/cm,
- la puissance linéique limite est supérieure à 620W/cm,
- la variation limite est supérieure à 430W/cm,
- la variation limite est supérieure à 440 W/cm,
- la variation limite est supérieure à 450W/cm,
- l'oxyde métallique est du $Cr_2O_3$,
- les pastilles comprennent entre 1200 à 2000 ppm en masse de $Cr_2O_3$.
- les pastilles comprennent entre 1450 à 1750 ppm en masse de $Cr_2O_3$,
- l'intérieur de la gaine a été pressurisée, avant utilisation, à une pression inférieure à 20 bars.

L'invention a également pour objet une utilisation :

- dans un crayon de combustible comprenant un empilement de pastilles de combustible nucléaire à base d'uranium,
- d'une gaine en alliage totalement recristallisé à base de zirconium ayant en masse :

- 0,8 à 1,3% de niobium,
- 1000 à 1700 ppm d'oxygène,
- entre 0 et 35 ppm de soufre,
- entre 0 et 7000 ppm au total de fer et de chrome et/ou de vanadium,
- entre 0 et 2% d'étain,
- entre 0 et 70ppm de nickel,
- entre 0 et 100 ppm de carbone, et
- entre 0 et 50 ppm de silicium,

le reste étant constitué par du zirconium, exception faite des impuretés inévitables, la gaine contenant les pastilles de combustible,

- pour réduire l'endommagement de la gaine par le phénomène d'interaction pastilles/gaine.

L'invention sera mieux comprise à la lecture de la description qui va suivre, donnée uniquement à titre d'exemple et faite en se référant aux dessins annexés, sur lesquels :

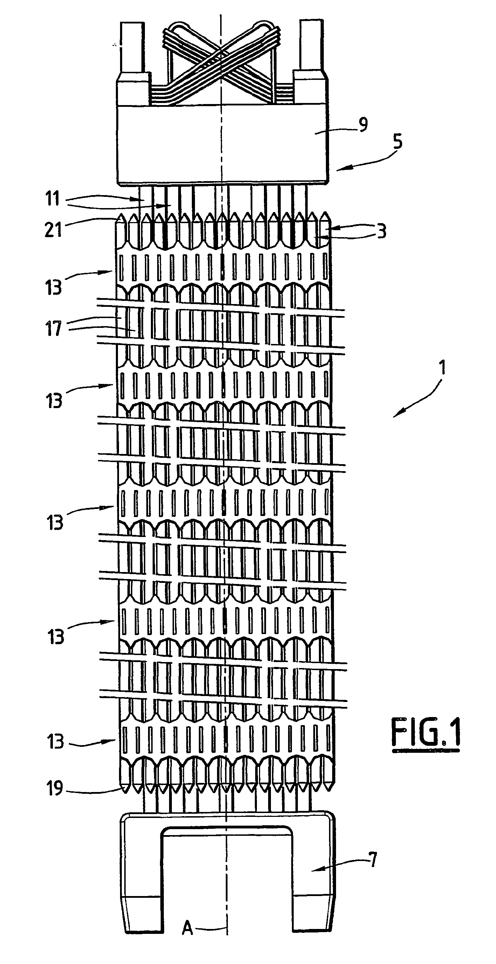

- la figure 1 est une vue schématique latérale d'un assemblage de combustible nucléaire permettant la mise en oeuvre d'un procédé d'exploitation selon l'invention,

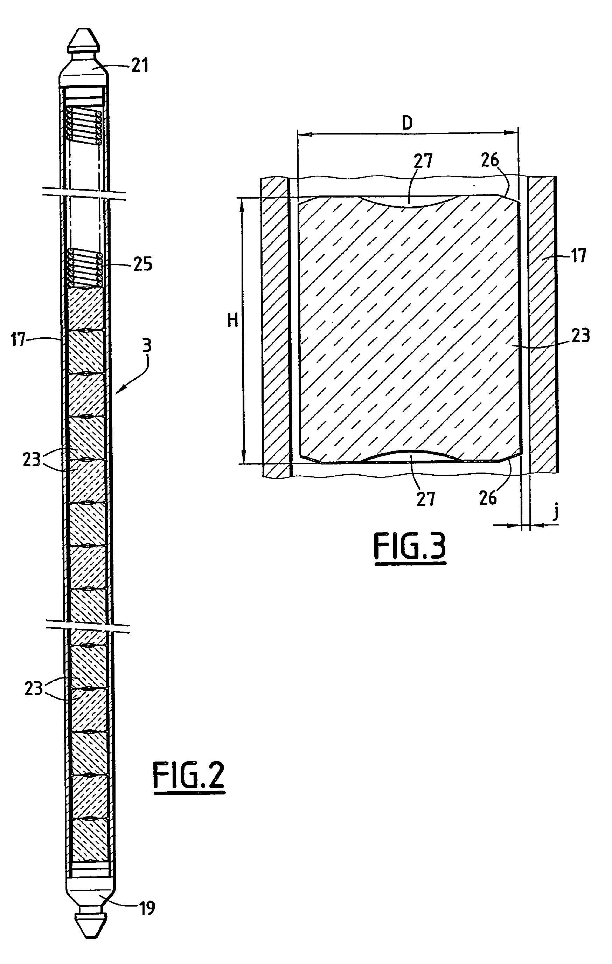

- la figure 2 est une vue schématique en coupe longitudinale d'un crayon de l'assemblage de la figure 1,
- la figure 3 est une vue schématique, partielle et agrandie, illustrant la forme d'une pastille du crayon de la figure 2,

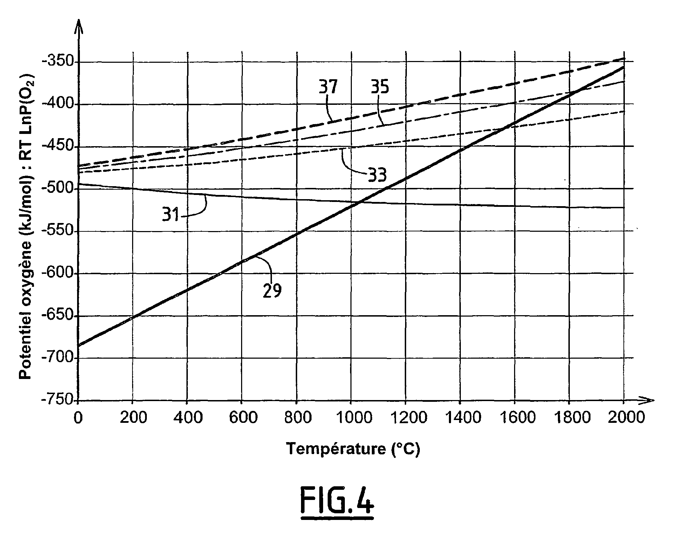

- la figure 4 est un graphique illustrant le domaine de stabilité de l'oxyde $Cr_2O_3$,

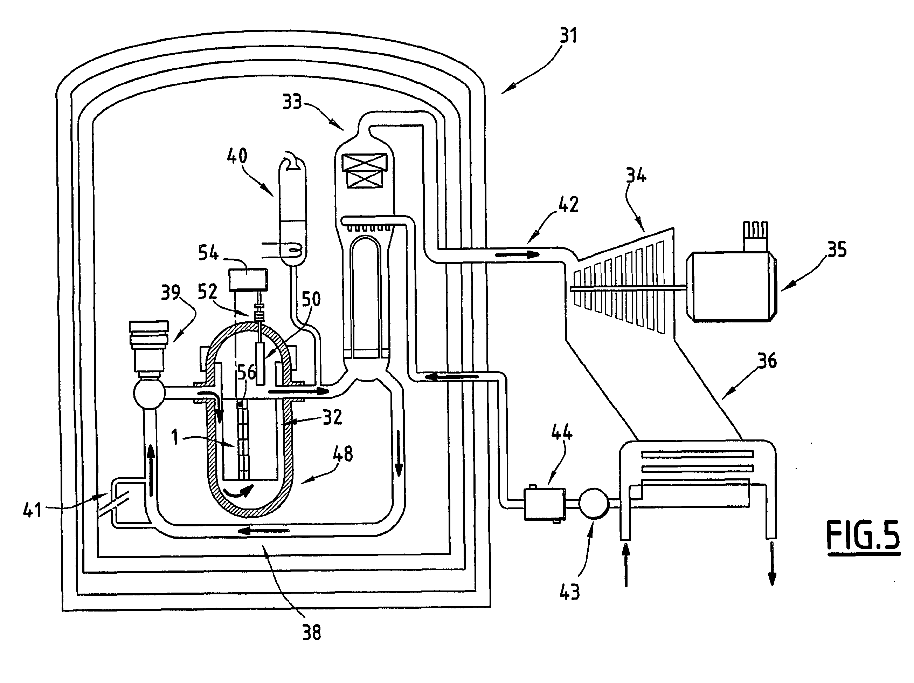

- la figure 5 est une vue schématique d'un réacteur nucléaire mettant en oeuvre un procédé d'exploitation selon l'invention, et

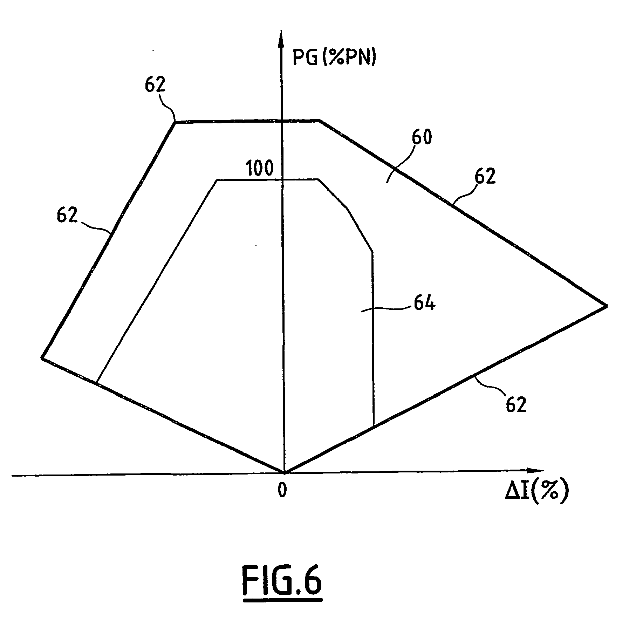

- la figure 6 est un diagramme représentant des domaines de fonctionnement du réacteur de la figure 5.

La figure 1 représente schématiquement un assemblage 1 de combustible nucléaire pour réacteur à eau pressurisée. L'eau y assure donc une fonction de réfrigération et de modération, c'est-à-dire de ralentissement des neutrons produits par le combustible nucléaire.
L'assemblage 1 s'étend verticalement et de manière rectiligne le long d'une direction longitudinale A.
De manière classique, l'assemblage 1 comprend principalement des crayons 3 de combustible nucléaire et une structure ou squelette 5 de support des crayons 3.
Le squelette de support 5 comprend :

- un embout inférieur 7 et un embout supérieur 9 disposés aux extrémités longitudinales de l'assemblage 1,
- des tubes-guides 11 destinés à recevoir les crayons d'une grappe non-représentée de commande et d'arrêt du réacteur nucléaire, et
- des grilles 13 de maintien des crayons 3.

Les embouts 7 et 9 sont reliés aux extrémités longitudinales des tubes guides 11.

Les crayons 3 s'étendent verticalement entre les embouts 7 et 9. Les crayons 3 sont disposés aux noeuds d'un réseau sensiblement régulier à base carrée où ils sont maintenus par les grilles 13. Certains des noeuds du réseau sont occupés par les tubes-guides 11 et éventuellement par un tube d'instrumentation.

Comme illustré par la figure 2, chaque crayon 3 comprend une gaine extérieure 17 fermée par un bouchon inférieur 19 et un bouchon supérieur 21, et contenant le combustible nucléaire.

Il s'agit ici de pastilles de combustible 23 empilées, les pastilles 23 prenant appui sur le bouchon inférieur 19.

Un ressort hélicoïdal de maintien 25 est disposé dans la gaine 17, entre la pastille 23 supérieure et le bouchon supérieur 21.

Comme illustré par la figure 3, chaque pastille 23 a une forme sensiblement cylindrique avec des chanfreins 26 entre ses faces d'extrémité et sa face latérale. Un évidement 27 en calotte sphérique est ménagé dans chaque face d'extrémité, sensiblement au centre de celle-ci.

Le rapport hauteur/diamètre H/D peut être quelconque, par exemple d'environ 1,6, mais également plus faible par exemple d'environ 0,5.

Un jeu diamétral j, compris par exemple entre 100 et 300 $\mu$m, est prévu entre les pastilles 23 et la gaine 17.

Pour garantir un bon échange thermique dans le crayon 3 avant entrée en contact des pastilles 23 et de la gaine 17, le crayon de combustible 3 est en outre rempli d'un gaz thermiquement conducteur, tel que l'hélium. La pression de ce gaz contribue également à différer dans le temps l'entrée en contact des pastilles 23 et de la gaine 17, entrée en contact qui marque le début de l'interaction pastille/gaine.

La pression de ce gaz avant utilisation de l'assemblage 1 sera généralement comprise entre 10 et 30 bars. Dans un exemple de réalisation, le crayon de combustible 3 sera pressurisé à 25 bars d'hélium. Dans certaines variantes, la pression interne du crayon 3 sera inférieure à 20 bars.

Le combustible des pastilles 23 est par exemple de l'oxyde d'uranium ($UO_2$) enrichi en isotope 235.

En variante, le combustible peut également être constitué d'oxyde mixte uranium-plutonium, ou d'uranium-thorium, ou encore d'uranium- poison neutronique à base de terre rare (gadolinium, erbium). En particulier, des crayons 3 du même assemblage 1 peuvent posséder des combustibles nucléaires différents.

Un oxyde métallique a été ajouté en faible quantité afin d'améliorer les propriétés viscoplastiques du combustible et ainsi réduire les conséquences du phénomène d'IPG.

En l'occurrence, l'amélioration des propriétés viscoplastiques du combustible a été obtenue par addition d'oxyde de chrome $Cr_2O_3$.

L'addition de la poudre d'oxyde de chrome $Cr_2O_3$ à celle d'oxyde d'uranium peut être par exemple réalisée par mélange mécanique de manière que la répartition du dopant $Cr_2O_3$ soit homogène sur l'ensemble de la masse du mélange. Ce mélange peut ensuite être soumis à diverses opérations (précompaction, granulation, sphéroïdisation, lubrification) visant à améliorer sa coulabilité et sa frittabilité. L'étape de lubrification peut être conduite avec un produit organique contenant le cas échéant un composé métallique tel que le zinc ou l'aluminium.

Le mélange est ensuite comprimé à froid pour former les pastilles 23.

Pour promouvoir le développement de la croissance cristalline, le frittage des pastilles est réalisé dans des conditions thermodynamiques telles que le dopant $Cr_2O_3$ ne puisse pas être réduit à l'état métallique Cr.

A l'issue de la fabrication des pastilles 23, l'additif $Cr_2O_3$ n'aura donc pas été réduit.

L'évolution du potentiel d'oxygène (en kJ/mol) correspondant à l'équilibre Cr/$Cr_2O_3$ en fonction de la température est représentée sur la figure 4 par la droite 29. Le domaine de stabilité de $Cr_2O_3$ se situant au dessus de la droite 29 d'équilibre Cr/$Cr_2O_3$, on choisira dans la pratique une atmosphère permettant de garantir le respect de ce domaine de stabilité pendant tout le frittage. Sur la figure 4, les droites 31, 33, 35 et 37 correspondent à des atmosphères d'hydrogène contenant respectivement 0,05 ; 1 ; 2,5 et 5% en volume d'$H_2O$. Pour chacune de ces atmosphères le potentiel d'oxygène est donc l'ordonnée au point d'intersection entre la droite 31, 33, 35 ou 37 considérée et la droite 29.

Ainsi, l'utilisation d'un mélange gazeux d'hydrogène avec une teneur en eau comprise entre 1,7 et 2,5 % en volume permettra de conserver la phase $Cr_2O_3$ lorsque le frittage est conduit jusqu'à des températures de 1700 à 1800°C.

Dans ces conditions de frittage, le développement de la croissance cristalline dans la matrice d'$UO_2$ est directement proportionnel à l'addition en $Cr_2O_3$ lorsque sa teneur massique est comprise entre 750 et 1500 ppm. Cette croissance des grains résulte directement de la mise en solution de l'oxyde de chrome $Cr_2O_3$ dans la matrice combustible. Au-delà de 1500 ppm en masse, et du fait d'un défaut de solubilisation du dopant dans la matrice $UO_2$, de l'oxyde de chrome précipite aux joints de grains conduisant à l'activation d'un second mécanisme de croissance cristalline qui conduit à une variation quasi exponentielle de la taille des grains. La migration très rapide des joints de grains, conduit également à isoler des précipités de $Cr_2O_3$ non dissous dans les grains de la matrice $UO_2$.

En fonction de la teneur en oxyde de chrome $Cr_2O_3$ mise en oeuvre, et donc du type de microstructure engendré, le comportement en fluage du combustible est modifié.

La mise en solution de $Cr_2O_3$ dans $UO_2$ provo-

que des distorsions du réseau cristallin et induit un durcissement. Toutefois, celui-ci est compensé par l'accroissement de la taille des grains qui favorise le déplacement des dislocations. En effet, plus les grains sont gros, plus le libre parcours des dislocations est grand avant qu'elles ne rencontrent des obstacles, tels que les joints de grains. Par contre, lorsque l'excès de dopant non solubilisé devient important, la matrice contient des précipités sphériques et micrométriques de $Cr_2O_3$, où les dislocations viennent s'ancrer. Il en résulte un complément de durcissement pour lequel un accroissement de la taille des grains est sans effet. De fait, on observe une saturation de la vitesse de fluage des combustibles dopés au-delà de 1750 ppm en masse d'oxyde de chrome.

Dans la pratique, la teneur optimale pour le dopage avec $Cr_2O_3$ sera comprise entre 1200 et 2200 ppm en masse. Il sera avantageux de retenir une teneur de 1600 ± 150 ppm en masse qui permet d'obtenir des caractéristiques optimales en comparaison d'un combustible standard à base d'uranium enrichi, à savoir un accroissement très significatif de la taille des grains (supérieure à 45 μm) et des propriétés en fluage du combustible intéressantes.

Ce dopage des pastilles 23 en $Cr_2O_3$ augmente donc leur viscoplasticité et favorise leur fluage à haute température.

Or, lors d'un transitoire de classe 2, la température des pastilles 23 peut dépasser largement 1200°C. Cette température correspond au domaine d'activation du fluage thermique des combustibles à base d'uranium. Sous l'effet de la température, le matériau des pastilles 23 a alors tendance à s'écouler vers le centre des pastilles 23 mises en compression, et donc à combler les évidements 27. En conséquence, les contraintes sur les surfaces latérales des pastilles 23, qui comparativement restent froides (température inférieure à 1000°C), vont diminuer et ainsi la poussée des pastilles 23 sur la gaine 17 sera également réduite.

Au cours du transitoire de puissance de classe 2, la gaine 17 impose une rétroaction sur les faces latérales des pastilles 23. Du fait du champ de température régnant au sein du combustible, ces faces latérales restent relativement froides et demeurent donc fragiles et susceptibles de se microfissurer sous l'effet de la rétroaction imposée par la gaine 17.

La microfissuration sera d'autant plus développée que l'énergie résultant de la rétroaction de la gaine 17 devra se dissiper dans un volume réduit, c'est-à-dire lorsque l'amélioration des propriétés viscoplastiques des pastilles 23 intervient sur un volume important au sein du combustible. Ce mécanisme de microfissuration radiale périphérique est également de nature à diminuer les concentrations locales de contraintes dans la gaine 17 par une moindre amplitude d'ouverture des lèvres des fissures.

Ainsi au cours du transitoire, des contres réactions des pastilles 23 et de la gaine 17 peuvent s'instaurer, s'opposant toutes deux aux effets instantanés des déplacements différentiels d'origine thermique.

Pour toutes ces raisons, le dopage précité des pastilles 23 réduit la composante mécanique du risque de rupture par IPG.

En outre, il réduit la composante chimique de ce type de rupture, car les pastilles 23 ont une plus grande capacité de rétention des gaz de fission tels que l'iode.

L'accroissement de la taille des grains du combustible dopé avec de l'oxyde de chrome permet en effet d'augmenter la capacité de rétention des gaz de fission dans la matrice d'$UO_2$. Pour être relâchés hors de la matrice combustible, les atomes de gaz doivent d'abord diffuser de l'intérieur des grains d'$UO_2$ vers les joints de grains où ils s'accumulent pour former des bulles lenticulaires. L'interconnexion de ces bulles intergranulaires permet ensuite aux gaz de diffuser hors de la matrice combustible. Dans une structure à gros grains, les chemins de diffusion des gaz depuis l'intérieur des grains vers les joints sont allongés et il s'en suit une réduction de la fraction de gaz relâchée. Ce processus n'est efficace que si les coefficients de diffusion des gaz de fission ne sont pas accélérés par l'addition du produit dopant.

De ce point de vue, l'utilisation d'une teneur de 1600 ppm en masse de $Cr_2O_3$ est particulièrement avantageuse. De plus, la diffusion des atomes gazeux se fait selon une vitesse croissante avec la température, donc avec la puissance. L'utilisation d'un combustible à gros grains dopé avec $Cr_2O_3$, assurant une meilleure capacité de rétention des gaz de fission dans la matrice, permet de diminuer la concentration des produits de fission agressifs sur la surface interne de la gaine 17, et donc de réduire le risque de rupture de la gaine 17 par IPG.

De même, la diffusion des atomes gazeux et leur relâchement s'accélèrent avec l'augmentation du taux de combustion du combustible. L'utilisation d'un combustible à gros grains dopé avec $Cr_2O_3$, assurant une meilleure capacité de rétention des gaz de fission dans la matrice, permet de limiter la pression interne dans les crayons à hauts taux de combustion, laquelle augmentation de pression interne peut remettre en cause l'intégrité de la gaine 17.

Ainsi, les crayons 3 présentent, du fait de la nature des pastilles 23, un comportement satisfaisant vis-à-vis de l'IPG.

Afin d'améliorer encore la résistance des crayons 3 vis-à-vis de ce phénomène, les gaines 17 ont été réalisées en un alliage de zirconium particulier qui s'est avéré, de manière surprenante, très avantageux à cette fin.

Il s'agit en l'occurrence d'un alliage de zirconium totalement recristallisé ayant en masse :

- entre 0,8 et 1,3% de niobium, et
- entre 1000 et 1700 pm d'oxygène.

Dans des variantes préférées, cet alliage de zirconium pourra comprendre en outre entre 0 et 35ppm de soufre, entre 0 et 7000 ppm en masse au total de fer et de chrome et/ou de vanadium, de l'étain avec une teneur massique comprise entre 0 et 2 %, du nickel avec une teneur massique comprise entre 0 et 70 ppm, du carbone avec une teneur massique comprise entre 0 et 100 ppm et du silicium avec une teneur massique comprise entre 0 et 50 ppm.

Dans des variantes encore préférées, l'alliage peut comprendre :

- entre 5 et 35ppm en masse de soufre, et/ou
- entre 0,03 et 0,25% en masse au total de fer et de chrome et/ou de vanadium.

Partant de cet alliage, les gaines 17 ont par exemple été réalisées par un procédé comprenant des étapes de :

- réalisation d'une barre de l'alliage,
- trempe à l'eau après chauffage à une température comprise entre 1000 et 1200°C,
- filage d'une ébauche après chauffage à une température comprise entre 600 et 800°C,
- laminage à froid, en au moins deux passes, de l'ébauche pour obtenir un tube, avec des recuits entre 560 et 600°C, et
- recuit final de recristallisation entre 560 et 600°C, l'ensemble des traitements thermiques étant effectué en atmosphère inerte ou sous vide.

L'utilisation de recuits à des températures inférieures à 600°C ainsi que d'une teneur massique en niobium supérieure à 0,4%, permet de garantir la présence de précipités de β niobium, ce qui peut s'avérer avantageux dans certaines variantes.

On a pu constater que les gaines 17 réalisées dans l'alliage décrit ci-dessus présentent une très bonne résistance au fluage sous flux de neutrons rapides, retardant ainsi le premier instant de contact entre les pastilles 23 et les gaines 17, c'est-à-dire le début du phénomène d'IPG.

On pense que cette résistance au fluage est due à la présence de niobium à une teneur supérieure à sa limite de solubilité de 0,4% à l'état recristallisé et à la présence d'oxygène en solution qui gêne le déplacement des dislocations dans l'alliage.

En outre, on a constaté que les gaines 17 présentent une capacité de relaxation de contraintes importante du fait de leur comportement visco-plasticique sous très fortes contraintes.

Sur ces deux points, les alliages utilisés habituellement pour former les gaines, tels que le Zircaloy-4, ont des propriétés inférieures à celles de l'alliage décrit ci-dessus.

Des essais en réacteurs expérimentaux ont permis ainsi de déterminer que la puissance linéique Pmax au-delà de laquelle une rupture par IPG d'un crayon 3 peut être constatée est d'environ 444W/cm avec un alliage selon l'invention, alors que la valeur pour le Zircaloy-4 est d'environ 425W/cm. De même, on a pu constater que les gaines 17 pouvaient supporter des variations de puissance linéique ΔPmax d'environ 253W/cm, alors que dans le cas du Zircaloy-4, la variation de puissance limite était d'environ 170W/cm.

Ces valeurs ont été obtenues en utilisant dans les gaines 17 des pastilles classiques, c'est-à-dire sans $Cr_2O_3$.

Des essais analogues menés avec des gaines en Zircaloy-4 chargées de pastilles 23 telles que décrit ci-dessus ont permis de mesurer une puissance linéique maximale Pmax d'environ 530W/cm et une variation de puissance linéique maximale ΔPmax d'environ 330W/cm.

De manière surprenante, les mêmes essais conduits avec les crayons 3 décrits ci-dessus, c'est-à-dire avec l'alliage selon l'invention et les pastilles 23 dopées au $Cr_2O_3$ ont permis d'obtenir une puissance linéique maximale Pmax d'environ 620W/cm et une variation de puissance linéique maximale ΔPmax d'environ 450W/cm.

L'utilisation combinée de pastilles 23 dopées et de gaines 17 réalisées dans l'alliage selon l'invention permet donc d'atteindre un gain en puissance linéique maximale Pmax et en variation de puissance linéique maximale ΔPmax qui est supérieur à la somme des gains obtenus lors de l'utilisation séparée de l'alliage selon l'invention et de pastilles 23 dopées.

On conçoit donc que les crayons 3 décrits ci-dessus, avec les gaines 17 et les pastilles 23 dopées peuvent supporter des transitoires de puissances beaucoup plus sévères, ce qui permet d'accroître la souplesse d'exploitation des réacteurs dans lesquels des assemblages 1 sont chargés.

La figure 5 illustre un tel réacteur 31 à eau pressurisée qui comprend classiquement :

- un coeur 32 contenu dans une cuve 48,
- un générateur de vapeur 33,
- une turbine 34 couplée à un générateur 35 d'énergie électrique, et
- un condenseur 36.

Le réacteur 31 comprend un circuit primaire 38 équipé d'une pompe 39 et dans lequel circule de l'eau sous pression, selon le trajet matérialisé par les flèches sur la figure 5. Cette eau remonte notamment au travers du coeur 32 pour y être réchauffée en assurant la réfrigération du coeur 32.

Le circuit primaire 38 comprend en outre un pressuriseur 40 permettant de mettre sous pression l'eau circulant dans le circuit primaire 38.

Un circuit 41 de contrôle volumétrique et chimique, dénommé généralement circuit RCV, est raccordé au circuit primaire 38, notamment pour assurer la filtration et la purification de l'eau circulant dans le circuit primaire 38.

L'eau du circuit primaire 38 alimente le générateur de vapeur 33 où elle est refroidie en assurant la vaporisation d'eau circulant dans un circuit secondaire 42.

La vapeur produite par le générateur 33 est canalisée par le circuit secondaire 42 vers la turbine 34 puis vers le condenseur 36 où cette vapeur est condensée par échange de chaleur indirect avec de l'eau de refroidissement circulant dans le condenseur 36.

Le circuit secondaire 42 comprend en aval du condenseur 36 une pompe 43 et un réchauffeur 44.

De manière classique également, le coeur 32 comprend des assemblages combustibles 1 qui sont chargés dans sa cuve 48. Un seul assemblage 1 est représenté sur la figure 5, mais le coeur 32 comprend par exemple 157 assemblages 1.

Le réacteur 31 comprend des grappes de contrôle 50 qui sont disposées dans la cuve 48 au-dessus de certains assemblages 1. Une seule grappe 50 est représentée sur la figure 1, mais le coeur 32 peut comprendre par exemple environ 70 grappes 50.

Les grappes 50 peuvent être déplacées par des mécanismes 52 sous l'action de moyens 54 de pilotage pour venir s'insérer dans les assemblages 1 qu'elles surplombent.

Classiquement, chaque grappe de contrôle 50 comprend des crayons de contrôle en un matériau absorbant les neutrons.

Ainsi, le déplacement vertical de chaque grappe 50 permet de régler la réactivité du réacteur 31, en fonction de l'enfoncement des grappes 50 dans les assemblages combustibles 1.

Le réacteur nucléaire 31 fournit, grâce au générateur 35, de l'électricité à un réseau électrique.

Les moyens 54 de pilotage ont été réglés pour contrôler le fonctionnement du réacteur 1 de sorte que, notamment lors d'un transitoire de puissance en situation de classe 2, la puissance linéique P dans les crayons 3 des assemblages 1 reste inférieure à une valeur limite PL, laquelle est supérieure à 590W/cm, de préférence supérieure à 600W/cm, de préférence encore supérieure à 610W/cm ou même supérieure à 620W/cm.

Ainsi, lors d'un transitoire de puissance, la puissance linéique P dans certain des crayons 3 peut être effectivement strictement supérieure à 535W/cm, tout en étant inférieure à la limite Pmax déterminée pour les crayons 3 selon l'invention.

La puissance linéique effective dans les crayons 3 est estimée, à partir de mesures de paramètres de fonctionnement fournies par des capteurs 56, par des logiciels de calcul classiques stockés dans une mémoire des moyens 54 de pilotage.

De même, les moyens 54 de pilotage ont été réglés de sorte que, notamment lors d'un transitoire de puissance, la variation de la puissance linéique ΔP dans les crayons 3 reste inférieure à une variation limite ΔPL qui est supérieure à 430W/cm, de préférence supérieure à 440W/cm, et de préférence encore supérieure à 450W/cm. Ainsi, dans certaines conditions de fonctionnement la variation de puissance linéique ΔP subie par certains crayons 3 peut être effectivement strictement supérieure à 330W/cm tout en restant inférieure à la limite ΔPmax déterminée pour les crayons 3 selon l'invention.

Les moyens 54 de pilotage ont été ainsi réglés par exemple en stockant les valeurs limites précitées PL et ΔPL dans une mémoire. Ils effectuent leur contrôle par exemple en comparant les valeurs effectives de P et de ΔP avec les valeurs seuils PL et ΔPL stockées.

Lorsque les moyens 54 de pilotage détectent une augmentation de la puissance linéique P ou de la variation de puissance linéique ΔP au-delà des valeurs seuils PL et ΔPL, les moyens 54 de pilotage peuvent, par exemple, déclencher une action corrective pour stopper l'augmentation de la puissance linéique et/ou déclencher une alarme.

Les valeurs PL et ΔPL sont élevées de sorte que le réacteur 31 peut être exploité de manière plus souple que traditionnellement et répondre ainsi rapidement à des demandes instantanées et importantes du réseau d'électricité auquel le générateur 5 est relié, en faisant subir des transitoires de puissance importants aux assemblages 1 que le coeur 32 contient.

Ainsi, la combinaison de l'alliage utilisé pour réaliser les gaines 17 et de pastilles 23 dopées en $Cr_2O_3$ a permis de réaliser des crayons 3 très résistants vis-à-vis de l'IPG, réduisant ainsi les risques de rupture des gaines 17 notamment lors des transitoires de puissance, quel que soit leur type.

En variante, on pourrait utiliser en tant qu'additif dans les pastilles 23, à la place ou en plus de $Cr_2O_3$, $SiO_2$, $Nb_2O_5$, $Al_2O_3$, $V_2O_5$ et MgO.

De manière générale on pourra utiliser un alliage tel que décrit ci-dessus dans des crayons 3 pour réduire l'endommagement de la gaine par le phénomène IPG, sans utiliser des pastilles 23 comprenant un oxyde métallique d'augmentation du fluage thermique des pastilles. En effet, comme on l'a exposé ci-dessus, l'utilisation de l'alliage en tant que tel permet d'améliorer le comportement vis-à-vis de l'IPG. Dans ce cas, PL est supérieure à 430W/cm, et de préférence supérieure à 440W/cm. ΔPL est alors supérieure à 180W/cm, de préférence supérieure à 200W/cm, de manière encore préférée supérieure à 240W/cm.

Pour respecter les valeurs seuils PL et ΔPL, les moyens 54 de pilotage peuvent utiliser des paramètres intermédiaires de calcul.

Ainsi, les valeurs seuils PL et ΔPL ont pu être converties en une densité d'énergie de déformation limite dans les gaines 17, cette densité d'énergie étant définie par exemple par la formule :

$$DED = \int \sigma_{\theta\theta}\, d\varepsilon_{\theta\theta}$$

où $\sigma_{\theta\theta}$ est la contrainte tangentielle en peau interne de la gaine 17, et $\varepsilon_{\theta\theta}$ est la déformation tangentielle en peau interne de la gaine 17.

Typiquement, la valeur de densité d'énergie de déformation limite DEDL ainsi obtenue est d'environ 3 MPa ce qui représente un gain d'environ 50% par rapport au Zircaloy-4.

L'utilisation d'une densité d'énergie de déformation s'avère particulièrement intéressante car la grande viscoplasticité de l'alliage décrit induit une saturation des contraintes lors d'un transitoire de puissance. De ce fait, l'utilisation d'une densité d'énergie de déformation comme paramètre intermédiaire, plutôt que d'une contrainte limite, s'avère plus pertinente.

La valeur limite DEDL a pu être traduite en valeurs limites de paramètres de fonctionnement du réacteur, tels que par exemple la puissance globale effective PG exprimée en pourcents de la puissance nominale PN du réacteur 31 et l'écart $\Delta I$ de puissance entre la partie haute et la partie basse du réacteur 31. Une telle méthode est par exemple décrite dans la demande FR-2 846 139. Ces valeurs limites ont alors conduit à la définition d'un domaine 60 autorisé pour les transitoires de classe 2, comme illustré par la figure 6.

Les frontières 62 du domaine 60 correspondent aux seuils d'arrêt d'urgence du réacteur 31. Dès qu'un transitoire de classe 2 conduit à sortir du domaine 60, l'arrêt du réacteur 31 est déclenché.

Pour vérifier que les valeurs seuils PL et $\Delta$PL ne sont pas dépassées, on compare donc les valeurs effectives des paramètres de fonctionnement PG et $\Delta I$ aux valeurs limites correspondantes.

Le domaine 60 entoure un domaine 64 correspondant aux situations de classe 1.

Le risque de rupture par IPG n'existe que lors d'une augmentation significative de la puissance linéique locale dissipée par les pastilles de combustible 23. Les transitoires accidentels de classe 2 conduisant aux augmentations les plus importantes de la puissance linéique locale, par déformation de la distribution spatiale de la puissance, sont initiés à partir de situations de classe 1 localisées à l'intérieur du domaine de fonctionnement 64 de la figure 6. Ces situations sont par exemple décrites dans la demande FR-2 846 139.

Pour les modes courants de fonctionnement du réacteur 31 en classe 1 (fonctionnement en base, en réglage primaire, en téléréglage), les valeurs de $\Delta I$ sont comprises, par exemple, entre -15 et +15%. Lors d'un transitoire de puissance initié à partir de ces modes de fonctionnement, les pics locaux de puissance linéique restent d'une amplitude modérée en haut et en bas du coeur 32.

En revanche, lorsque le réacteur 31 fonctionne de manière prolongée à puissance intermédiaire (PG < 92% PN pendant plus de 8h par plage de 24h) pour s'adapter à la demande en électricité du réseau, le point de fonctionnement se déplace vers les zones externes du domaine 64 de la figure 6. Ces zones sont caractérisées par des valeurs de $\Delta I$ fortement négatives ou positives, qui peuvent se traduirent par des variations de puissances linéiques locales très importantes en cas d'apparition ultérieure d'un transitoire de puissance de classe 2. De plus, un tel fonctionnement prolongé à puissance intermédiaire a pour effet de déconditionner les crayons de combustible 3. En effet, si localement la puissance diminue, il en résulte une baisse de température dans les pastilles 23 et dans la gaine 17 de chaque crayon 3, la variation de température dans les pastilles 23 étant plus importante que celle dans la gaine 17. Compte tenu des caractéristiques respectives de dilatation thermique de la gaine 27 et des pastilles 23 du crayon 3, le jeu radial j, normalement fermé lors du fonctionnement du réacteur, se réouvre. Dans cette configuration, la gaine 17 flue en compression. Il en résulte une augmentation de son chargement mécanique lorsque survient le transitoire accidentel et donc un risque de rupture par IPG. Ce risque est d'autant plus important que le déconditionnement du crayon de combustible 3 est important, et donc que la durée du fonctionnement à puissance intermédiaire s'est prolongé.

Les frontières 62 du domaine de fonctionnement 60 de la figure 6 permettent d'éliminer les risques de rupture par IPG lors d'un tel transitoire.

L'augmentation des valeurs PL et $\Delta$PL grâce à l'utilisation des crayons de combustible 3 précédemment décrit permet également au réacteur 31 d'être exploité de manière plus souple que traditionnellement en autorisant des durées allongées de fonctionnement à puissance intermédiaire.

**Revendications**

1. Procédé d'exploitation d'un réacteur nucléaire (31) pour produire de l'électricité, le réacteur comprenant un cour (32) chargé avec des assemblages (1) comportant des crayons de combustible nucléaire (3), au moins un crayon de combustible nucléaire étant du type comprenant :

- une gaine (17) en alliage à base de zirconium totalement recristallisé ayant en masse,

. entre 0,8 à 1,3 % de niobium,
. entre 1000 ppm et 1700 ppm d'oxygène,
. entre 0 et 35 ppm de soufre,
. entre 0 et 7000 ppm au total de fer et de chrome et/ou de vanadium,
. entre 0 et 2% d'étain,
. entre 0 et 70ppm de nickel,
. entre 0 et 100 ppm de carbone, et
. entre 0 et 50 ppm de silicium,

le reste étant constitué par du zirconium, exception faite des impuretés inévitables, et
- des pastilles (23) de combustible nucléaire à base d'oxyde d'uranium, les pastilles étant em-

piées à l'intérieur de la gaine (17),
procédé dans lequel on contrôle le fonctionnement du réacteur pour que, lors d'un transitoire de puissance :
- la puissance linéique du crayon de combustible nucléaire (3) reste inférieure à une puissance linéique limite stockée dans une mémoire, la puissance linéique limite étant supérieure à 430W/cm, et/ou
- la variation de puissance linéique du crayon de combustible nucléaire (3) reste inférieure à une variation limite stockée dans une mémoire, la variation limite étant supérieure à 180W/cm.

2. Procédé selon la revendication 1, dans lequel la puissance linéique limite est supérieure à 440W/cm.

3. Procédé selon la revendication 1 ou 2, dans lequel la variation limite est supérieure à 200W/cm.

4. Procédé selon la revendication 3, dans lequel la variation limite est supérieure à 220W/cm.

5. Procédé selon l'une des revendications précédentes, dans lequel l'alliage comprend en masse entre 5 et 35ppm de soufre.

6. Procédé selon l'une des revendications précédentes, dans lequel l'alliage comprend entre 0,03 et 0,25% au total de fer et de chrome et/ou de vanadium.

7. Procédé selon l'une des revendications précédentes, dans lequel l'alliage a subi des recuits à des températures inférieures à 600°C.

8. Procédé selon l'une des revendications précédentes, dans lequel les pastilles (23) comprennent au moins un oxyde métallique d'augmentation du fluage thermique des pastilles et en ce que la puissance linéique limite est supérieure à 590W/cm.

9. Procédé selon la revendication 8, dans lequel la puissance linéique limite est supérieure à 600W/cm.

10. Procédé selon la revendication 9, dans lequel la puissance linéique limite est supérieure à 610W/cm.

11. Procédé selon la revendication 10, dans lequel la puissance linéique limite est supérieure à 620W/cm.

12. Procédé selon l'une des revendications 8 à 11, dans lequel la variation limite est supérieure à 430W/cm.

13. Procédé selon la revendication 12, dans lequel la variation limite est supérieure à 440 W/cm.

14. Procédé selon la revendication 13, dans lequel la variation limite est supérieure à 450W/cm.

15. Procédé selon l'une des revendications 8 à 14, dans lequel l'oxyde métallique est du $Cr_2O_3$.

16. Procédé selon la revendication 15, dans lequel les pastilles (23) comprennent entre 1200 à 2000 ppm en masse de $Cr_2O_3$.

17. Procédé selon la revendication 16, dans lequel les pastilles (23) comprennent entre 1450 à 1750 ppm en masse de $Cr_2O_3$.

18. Procédé selon l'une des revendications précédentes, dans lequel l'intérieur de la gaine (17) a été pressurisée, avant utilisation, à une pression inférieure à 20 bars.

19. Utilisation
dans un crayon de combustible (3) comprenant un empilement de pastilles (23) de combustible nucléaire à base d'uranium,
d'une masse : en alliage totalement recristallisé à base de zirconium pour réduire l'endommagement de la gaine (17) par le phénomène d'interaction pastilles/gaine, cette gaine en alliage ayant en masse :

- 0,8 à 1,3% de niobium,
- 1000 à 1700 ppm d'oxygène,
- entre 0 et 35 ppm de soufre,
- entre 0 et 7000 ppm au total de fer et de chrome et/ou de vanadium,
- entre 0 et 2% d'étain,
- entre 0 et 70ppm de nickel,
- entre 0 et 100 ppm de carbone, et
- entre 0 et 50 ppm de silicium,

le reste étant constitué par du zirconium, exception faite des impuretés inévitables, la gaine contenant les pastilles de combustible.

**Claims**

1. Method of operating a nuclear reactor (31) to produce electricity, the reactor comprising a core (32) loaded with assemblies (1) comprising nuclear fuel rods (3), at least one nuclear fuel rod being of the type comprising:

- a cladding (17) of completely recrystallized zirconium-based alloy comprising by mass:
- between 0.8 and 1.3 % of niobium,
- between 1000 ppm and 1700 ppm of oxygen,
- between 0 and 35 ppm of sulphur,
- between 0 and 7000 ppm in total of iron and chromium and/or vanadium,
- between 0 and 2% of tin,

- between 0 and 70 ppm of nickel,
- between 0 and 100 ppm of carbon, and
- between 0 and 50 ppm of silicon,
the rest being made up of zirconium, with the exception of inevitable impurities, and
- pellets (23) of nuclear fuel with a base of uranium oxide, the pellets being stacked inside the cladding (17),

in which method operation of the reactor is controlled so that, during a transient power:

- the linear power density of the nuclear fuel rod (3) remains lower than a threshold linear power density stored in a memory, the threshold linear power density being greater than 430W/cm, and/or
- the variation in linear power density of the nuclear fuel rod (3) remains lower than a threshold variation stored in a memory, the threshold variation being greater than 180W/cm.

2. Method as claimed in claim 1, in which the threshold linear power density is greater than 440W/cm.

3. Method as claimed in claim 1 or 2, in which the threshold variation is greater than 200W/cm.

4. Method as claimed in claim 3, in which the threshold variation is greater than 220W/cm.

5. Method as claimed in one of the preceding claims, in which the alloy contains by mass between 5 and 35 ppm of sulphur.

6. Method as claimed in one of the preceding claims, in which the alloy contains between 0.03 and 0.25 % in total of iron and chromium and/or vanadium.

7. Method as claimed in one of the preceding claims, in which the alloy is subjected to annealing processes at temperatures below 600°C.

8. Method as claimed in one of the preceding claims, in which the pellets (23) comprise at least a metal oxide for increasing thermal creep of the pellets and the threshold linear power density is greater than 590W/cm.

9. Method as claimed in claim 8, in which the threshold linear power density is greater than 600W/cm.

10. Method as claimed in claim 9, in which the threshold linear power density is greater than 610W/cm.

11. Method as claimed in claim 10, in which the threshold linear power density is greater than 620W/cm.

12. Method as claimed in one of claims 8 to 11, in which the threshold variation is greater than 430W/cm.

13. Method as claimed in claim 12, in which the threshold variation is greater than 440W/cm.

14. Method as claimed in claim 13, in which the threshold variation is greater than 450W/cm.

15. Method as claimed in one of claims 8 to 14, in which the metal oxide is $Cr_2O_3$.

16. Method as claimed in claim 15, in which the pellets (23) comprise by mass between 1200 and 2000 ppm of $Cr_2O_3$.

17. Method as claimed in claim 16, in which the pellets (23) comprise between 1450 and 1750 ppm by mass of $Cr_2O_3$.

18. Method as claimed in one of the preceding claims, in which the interior of the cladding (17) is pressurised prior to use at a pressure of less than 20 bar.

19. Use, in a fuel rod (3) comprising a stack of pellets (23) of nuclear fuel with a uranium base, of a cladding of a totally recrystallized zirconium-based alloy in order to reduce damage to the cladding (17) caused by the phenomenon of pellets/cladding interaction, this cladding of alloy comprising by mass:

- 0.8 to 1.3 % of niobium,
- 1000 to 1700 ppm of oxygen,
- between 0 and 35 ppm of sulphur,
- between 0 and 7000 ppm in total of iron and chromium and/or vanadium,
- between 0 and 2% of tin,
- between 0 and 70 ppm of nickel,
- between 0 and 100 ppm of carbon, and
- between 0 and 50 ppm of silicon,

the rest being made up of zirconium, with the exception of inevitable impurities, the fuel pellets being contained in the cladding.

**Patentansprüche**

1. Verfahren zum Betreiben eines Kernreaktors (31), um Elektrizität zu erzeugen, wobei der Reaktor einen Kern (32) umfasst, der mit Bündeln (1) aus Kernbrennstoffstäben (3) geladen ist, wobei mindestens ein Kernbrennstoffstab vom Typ ist umfassend:

- ein Hüllrohr (17) aus einer vollständig rekristallisierten Legierung auf Zirkonium-Basis, die in Masse

• zwischen 0,8 bis 1,3 % Niobium,
• zwischen 1000 und 1700 ppm Sauerstoff,
• zwischen 0 und 35 ppm Schwefel,
• zwischen 0 und 7000 ppm insgesamt Eisen und Chrom und/oder Vanadium,
• zwischen 0 und 2% Zinn,
• zwischen 0 und 70 ppm Nickel,
• zwischen 0 und 100 ppm Kohlenstoff und
• zwischen 0 und 50 ppm Silizium

aufweist, wobei der Rest von Zirkonium, mit Ausnahme von unvermeidbaren Verunreinigungen, gebildet ist, und

- Kernbrennstoffpellets (23) auf der Basis von Uranoxid, wobei die Pellets im Innern des Hüllrohrs (17) aufeinandergestapelt sind, wobei in dem Verfahren die Funktionsweise des Reaktors kontrolliert wird, damit, bei einem Leistungstransienten,

- die längenbezogene Leistung des Kernbrennstoffstabs (3) kleiner bleibt als eine längenbezogene Grenzleistung, die in einem Speicher hinterlegt ist, wobei die längenbezogene Grenzleistung größer als 430 W/cm ist, und/oder

- die Schwankung der längenbezogenen Leistung des Kernbrennstoffstabs (3) kleiner bleibt als eine längenbezogene Grenzschwankung, die in einem Speicher hinterlegt ist, wobei die längenbezogene Grenzschwankung größer als 180 W/cm ist.

2. Vorrichtung nach Anspruch 1, wobei die längenbezogene Grenzleistung größer als 440 W/cm ist.

3. Vorrichtung nach Anspruch 1 oder 2, wobei die längenbezogene Grenzschwankung größer als 200 W/cm ist.

4. Vorrichtung nach Anspruch 3, wobei die längenbezogene Grenzschwankung größer als 220 W/cm ist.

5. Verfahren nach einem der vorhergehenden Ansprüche, wobei die Legierung in Masse zwischen 5 und 35 ppm Schwefel aufweist.

6. Verfahren nach einem der vorhergehenden Ansprüche, wobei die Legierung zwischen 0,03 und 0,25 % insgesamt Eisen und Chrom und/oder Vanadium enthält.

7. Verfahren nach einem der vorhergehenden Ansprüche, wobei die Legierung Glühprozessen bei Temperaturen unter 600 °C unterzogen wurde.

8. Verfahren nach einem der vorhergehenden Ansprüche, wobei die Pellets (23) mindestens ein Metalloxid zur Erhöhung des thermischen Kriechens der Pellets enthalten und dass die längenbezogene Grenzleistung größer als 590 W/cm ist.

9. Verfahren nach Anspruch 8, wobei die längenbezogene Grenzleistung größer als 600 W/cm ist.

10. Verfahren nach Anspruch 9, wobei die längenbezogene Grenzleistung größer als 610 W/cm ist.

11. Verfahren nach Anspruch 10, wobei die längenbezogene Grenzleistung größer als 620 W/cm ist.

12. Verfahren nach einem der Ansprüche 8 bis 11, wobei die Grenzschwankung größer als 430 W/cm ist.

13. Verfahren nach Anspruch 12, wobei die Grenzschwankung größer als 440 W/cm ist.

14. Verfahren nach Anspruch 13, wobei die längenbezogene Grenzschwankung größer als 450 W/cm ist.

15. Verfahren nach einem der Ansprüche 8 bis 14, wobei das Metalloxid $Cr_2O_3$ ist.

16. Verfahren nach Anspruch 15, wobei die Pellets (23) zwischen 1200 bis 2000 ppm in Masse $Cr_2O_3$ enthalten.

17. Verfahren nach Anspruch 16, wobei die Pellets (23) zwischen 1450 bis 1750 ppm in Masse $Cr_2O_3$ enthalten.

18. Verfahren nach einem der vorhergehenden Ansprüche, wobei das Innere des Hüllrohrs (17), vor Verwendung, mit einem Druck von weniger als 20 bar beaufschlagt wurde.

19. Verwendung in einem Brennstoffstab (3), der einen Stapel aus Kernbrennstoffstäben (23) auf Basis von Uran umfasst, eines Hüllrohrs aus einer vollständig rekristallisierten Legierung auf Zirkonium-Basis, um die Beschädigung des Hüllrohrs (17) durch das Phänomen der Wechselwirkung zwischen Pellets und Hüllrohr zu verringern, wobei dieses Legierungshüllrohr in Masse:

• 0,8 bis 1,3% Niobium,
• 1000 bis 1700 ppm Sauerstoff,
• zwischen 0 und 35 ppm Schwefel,
• zwischen 0 und 7000 ppm insgesamt Eisen und Chrom und/oder Vanadium,
• zwischen 0 und 2% Zinn,
• zwischen 0 und 70 ppm Nickel,
• zwischen 0 und 100 ppm Kohlenstoff und
• zwischen 0 und 50 ppm Silizium

aufweist, wobei der Rest von Zirkonium, mit Ausnahme von unvermeidbaren Verunreinigungen, gebildet ist, wobei das Hüllrohr Brennstoffpellets umfasst.

**FIG.1**

FIG.2

FIG.3

FIG.4

FIG.5

**FIG.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0245096 A
- FR 276821
- US 5838753 A
- US 5844959 A
- WO 0124193 A
- FR 2846139